# EUROPÄISCHE PATENTSCHRIFT

(11) **EP 2 617 291 B1**
(45) Veröffentlichungstag und Bekanntmachung des Hinweises auf die Patenterteilung: **31.10.2018**
(21) Anmeldenummer: 13000210.8
(22) Anmeldetag: 15.01.2013
(51) Int. Cl.: A23C 9/133, A23C 9/156, A23C 21/08, A23L 3/015, A23L 3/3418, A23L 3/3445, A23B 7/152, B65B 31/00, A23C 7/04, A23L 5/10, A23L 5/00

(54) **Verfahren zum Herstellen einer Lebensmittelkonserve aus Milch-, Obst- und/oder Gemüseprodukten**
Method for producing a preserved food from milk, fruit and/or vegetable products
Procédé de fabrication d'une conserve alimentaire à base de lait, fruits et/ou légumes

(30) Priorität: 18.01.2012 DE 102012000808
(43) Veröffentlichungstag der Anmeldung: 24.07.2013
(73) Patentinhaber: HIPP & CO, 6072 Sachseln (CH)
(72) Erfinder: Tomusch, Frithjof, 4810 Gmunden (AT)
(74) Vertreter: Schiweck Weinzierl Koch Patentanwälte Partnerschaft mbB

(56) Entgegenhaltungen:
- EP-A1- 2 241 506
- EP-A2- 0 301 956
- EP-A2- 0 836 935
- WO-A2-02/11566
- GB-A- 982 521
- US-A1- 2003 152 679
- DATABASE GNPD [Online] MINTEL; 30. April 2010 (2010-04-30), "Pasta Junior", XP002694701, Database accession no. 1309289
- SANJEEV K ET AL: "Low oxygen and inert gas processing of foods", CRITICAL REVIEWS IN FOOD SCIENCE AND NUTRITION,, Bd. 46, Nr. 5, 2006, Seiten 423-451, XP009168267, ISSN: 1040-8398

## Beschreibung

Die Erfindung betrifft ein Verfahren zum Herstellen einer Lebensmittelkonserve aus Milch-, Obst- und/oder Gemüseprodukten, bei dem die Produkte zuerst gemischt und dann abgefüllt werden.

Lebensmittelkonserven aus Milch-, Obst- und/oder Gemüseprodukten werden als sterile Konserven im Markt angeboten. Durch eine Abfüllung in möglichst sauerstofffreier Atmosphäre wird eine lange Haltbarkeit bei hoher Produktqualität erreicht. Eine höhere Produktqualität kann dadurch erzielt werden, dass nur eine geringere Mindesthaltbarkeitsdauer angegeben wird oder in dem die Konserven in einer Kühlkette ausgeliefert werden und im Kühlregal angeboten werden.

Die US 2003/152679 A1 beschreibt in Bezug auf die Verarbeitung von Rindfleisch, dass es wünschenswert wäre, die Prozessschritte der Verarbeitung unter Sauerstoffausschluss durchzuführen. Sie gibt aber kein Verfahren an, mit dem im industriellen Maßstab ein besonders niedriger Sauerstoffgehalt erzielt werden kann.

Der Erfindung liegt die Aufgabe zu Grunde, die Produktqualität derartiger Konserven insbesondere auch im Rahmen einer längeren Mindesthaltbarkeitsdauer besonders hoch zu halten.

Diese Aufgabe wird verfahrensmäßig mit einem Verfahren mit den Merkmalen des Patentanspruchs 1 gelöst.

Der Erfindung liegt die Erkenntnis zu Grunde, dass die Produktqualität einer Konserve nicht nur durch die lange Lagerung beeinträchtigt wird, sondern eine wesentliche Qualitätssteigerung bereits bei der Herstellung der Konserve erzielt werden kann. Dies wird dadurch erreicht, dass nicht nur während und nach dem Abfüllen der Restsauerstoffgehalt der die Produkte umgebenden Atmosphäre minimiert wird, sondern bereits in den vorgeschalteten Verfahrensschritten auf eine minimale Belastung der behandelte Produkte geachtet wird. Das heißt, dass bei einer Kaltzubereitung bereits das Mischen der Ausgangsprodukte bei minimaler Sauerstoffbelastung durchgeführt wird. Vorzugsweise wird die gesamte Prozesskette der der Abfüllung vorangehenden Bearbeitungsschritte ab Zulieferung der Ausgangsprodukte bei einem minimierten Restsauerstoffgehalt durchgeführt.

Es hat sich herausgestellt, dass die Produktqualität besonders dadurch erhöht wird, dass der Restsauerstoffgehalt auf unter 1 % abgesenkt wird. Die besten Ergebnisse wurden jedoch erzielt, in dem der Restsauerstoffgehalt auf unter 0,1 % abgesenkt wurde.

Für die Herstellung von gekochten Konserven wird vorgeschlagen, dass die Produkte zwischen dem Mischen und Abfüllen gekocht werden und der Restsauerstoffgehalt auch beim Kochen abgesenkt bleibt. Dabei kann auch während des Kochens gemischt werden.

Sofern die Produkte nicht bereits ausreichend zerkleinert zugeliefert werden wird vorgeschlagen, dass die Obst- und/oder Gemüseprodukte zerkleinert werden und der Restsauerstoffgehalt auch beim Zerkleinern abgesenkt bleibt.

Die Verfahrensschritte Zerkleinern, Mischen, Kochen und Abfüllen müssen dabei nicht nacheinander durchgeführt werden, sondern die Zeiten der einzelnen Verfahrensschritte können sich auch überschneiden. Außerdem können die Verfahrensschritte an unterschiedlichen Orten und zu unterschiedlichen Zeiten durchgeführt werden. Zur Erhöhung der Produktqualität sollte jedoch darauf geachtet werden, dass die Produkte weder während der Verfahrensschritte noch zwischen den Verfahrensschritten einer Atmosphäre mit nicht abgesenktem Restsauerstoffgehalt ausgesetzt werden.

Die Absenkung des Restsauerstoffgehaltes wird durch Evakuieren der die Produkte aufnehmenden Behältnisse erzielt. Dies können insbesondere für den Transport an die Produkte anliegende Folien sein. Während der Bearbeitungsschritte sind dies in der Regel evakuierbare Behälter, in denen zerkleinert, gemischt oder gekocht werden kann. Diese Behälter müssen nicht zwangsläufig während des Bearbeitungsschrittes unter Vakuum stehen, sondern sie können nach der Evakuierung auch mit Dampf oder oxidationsträge Schutzgasen, wie Stickstoff, Kohlendioxid und/oder Edelgasen gefüllt werden. Dies führt dazu, dass die Produkte während der jeweiligen Bearbeitungsschritte von einer Atmosphäre von Dampf oder oxidationsträgen Schutzgasen umgeben sind. Dies erlaubt es sogar in den Behandlungsbehältern einen geringen Überdruck entstehen zu lassen, um zu verhindern, dass sauerstoffhaltige Luft in den Behälter eindringt.

Ein besonders bevorzugtes Verfahren sieht daher vor, dass die Produkte in einer druckfesten Chargen-Koch-Mischanlage gemischt und erhitzt werden. Dies erleichtert die Behandlung der Produkte unter Sauerstoffausschluss.

Um einen definierten Restsauerstoffgehalt in der das Produkt umgebenden Atmosphäre sicher zu stellen, werden erfindungsgemäß folgende Verfahrensschritte vorgeschlagen:
a) Evakuieren der Produkte auf mehr als 500 mbar Unterdruck bei einer Produkttemperatur von unter 70 °C,
b) Vollständiger Abbau des Unterdrucks durch Einblasen von Stickstoff, Dampf oder einem oxidationsträgen Schutzgas,
c) Abwarten einer Konzentrationsausgleichszeit, die es ermöglicht, den Sauerstoff aus dem Produkt entweichen zu lassen,
d) Messen des Restsauerstoffgehaltes in der die Produkte umgebenden Atmosphäre,
e) je nach Restsauerstoffgehalt mehrmalige Wiederholung der Prozessschritte a) bis d) bis ein Zielwert erreicht wird.

Im Verfahrensschritt d) ist darauf zu achten, dass nach dem Evakuieren und dem anschließenden Rückbegasen einige Zeit verstreichen muss um einen Konzentrationsausgleich zwischen den Produkten und der die Produkte umgebenden Atmosphäre zu erzielen. Diese Zeit liegt unter 5 min und sollte so eingestellt sein, dass in dieser Konzentrationsausgleichszeit mindestens ein 95 %-iger und vorzugsweise sogar ein 99 %-iger Konzentrationsausgleich erzielt wird. Dieser Konzentrationsausgleich ist sinnvoll um den Evakuierungs- und Rückbegasungszyklus zu steuern. Eine Konzentrationsausgleichszeit, die mindestens 0,5 Minuten dauern sollte, ermöglicht es, den Sauerstoff aus dem Produkt entweichen zu lassen bevor eine weitere Evakuierung und eine erneute Begasung beginnt. Die Messung sollte daher vorzugsweise beispielsweise erst nach 0,5 Minuten und spätestens 5 Minuten nach Einblasen des Stickstoffs, des Dampfes oder des oxidationsträgen Gases durchgeführt werden.

Eine praktikable Verfahrensführung bei hoher Produktqualität wird dadurch erzielt, dass das Produkt auf unter 850 mbar Unterdruck bei einer Produkttemperatur von unter 25 °C evakuiert wird. Eine verbesserte Produktqualität wird jedoch bereits dadurch erreicht, dass das Produkt auf unter 500 mbar Unterdruck bei einer Produkttemperatur von unter 70 °C evakuiert wird.

In der Praxis ist es besonders vorteilhaft, wenn die Produkte in einer druckfesten Chargen-Koch-Mischanlage mit maximal 1.000 kg, vorzugsweise maximal 300 kg Chargengröße evakuiert werden.

In einem Ausführungsbeispiel werden 200 bis 300 kg Produkte in eine druckfeste Chargen-Koch-Mischanlage gegeben. Anschließend wird die Koch-Mischanlage evakuiert, sodass der Unterdruck im Behälter bei etwa 1.000 mbar liegt. Die Produkttemperatur liegt dabei bei etwa 20 °C. Anschließend wird in den Behälter Stickstoff eingeblasen, bis ein geringer Überdruck entsteht. Drei Minuten nach dem Einblasen des Stickstoffs wird der Restsauerstoffgehalt in der die Produkte umgebenden Atmosphäre gemessen. Sofern ein Restsauerstoffgehalt von 0,1 % noch nicht erreicht wird, wird erneut evakuiert und Stickstoff zugegeben, bis der geforderte Restsauerstoffgehalt von 0,1 % erreicht ist. Erst dann wird gemischt und gekocht.
Nach dem Kochen wird durch das Weiterleiten des Produktes in Rohren zur Abfüllanlage dafür gesorgt, dass die das Produkt umgebende Atmosphäre weiterhin bei unter 1 % Restsauerstoffgehalt liegt. Verbesserte Produktergebnisse wurden bereits durch eine geringe Absenkung des Restsauerstoffgehaltes während der Abfüllung erzielt.

## Patentansprüche

1. Verfahren zum Herstellen einer Lebensmittelkonserve aus Milch-, Obst- und/oder Gemüseprodukten, bei dem die Produkte zuerst gemischt und dann abgefüllt werden, wobei während des Mischens und des Abfüllens der Restsauerstoffgehalt der die Produkte umgebenden Atmosphäre auf unter 1 % abgesenkt ist, ***gekennzeichnet durch*** die folgenden Verfahrensschritte:
a) Evakuieren der Produkte auf mehr als 500 mbar Unterdruck bei einer Produkttemperatur von unter 70 °C,
b) Vollständiger Abbau des Unterdrucks **durch** Einblasen von Stickstoff, Dampf oder einem oxidationsträgen Schutzgas,
c) Abwarten einer Konzentrationsausgleichszeit, die es ermöglicht, den Sauerstoff aus dem Produkt entweichen zu lassen,
d) Messen des Restsauerstoffgehaltes in der die Produkte umgebenden Atmosphäre und
e) je nach Restsauerstoffgehalt mehrmalige Wiederholung der Prozessschritte a) bis d) bis ein Zielweit erreicht wird.

2. Verfahren nach Anspruch 1, ***dadurch gekennzeichnet, dass*** der Restsauerstoffgehalt auf unter 0,1 %, abgesenkt ist.

3. Verfahren nach Anspruch 1 oder 2, ***dadurch gekennzeichnet, dass*** die Produkte zwischen dem Mischen und dem Abfüllen gekocht werden und der Restsauerstoffgehalt auch beim Kochen abgesenkt bleibt.

4. Verfahren nach einem der vorhergehenden Ansprüche, ***dadurch gekennzeichnet, dass*** die Obst- und/oder Gemüseprodukte zerkleinert werden und der Restsauerstoffgehalt auch beim Zerkleinern abgesenkt bleibt.

5. Verfahren nach einem der vorhergehenden Ansprüche, ***dadurch gekennzeichnet, dass*** die Produkte in einer druckfesten Chargen-Koch-Mischanlage gemischt und erhitzt werden.

6. Verfahren nach einem der vorhergehenden Ansprüche, bei dem das Produkt auf unter 850 mbar Unterdruck bei einer Produkttemperatur von unter 25 °C evakuiert wird.

7. Verfahren nach einem der vorhergehenden Ansprüche, ***dadurch gekennzeichnet, dass*** die Produkte in einer druckfesten Chargen-Koch-Mischanlage mit maximal 1.000 kg, vorzugsweise maximal 300 kg Chargengröße evakuiert werden.

## Claims

1. A method for producing a preserved food from milk, fruit and/or vegetable products, wherein the products are first mixed and then filled , wherein during mixing and filling up the residual oxygen content of the atmosphere surrounding the products is decreased to below 1 %, ***characterised* by** the following procedural steps:
a) evacuating the products to more than 500 mbar negative pressure at a product temperature of below 70 °C,
b) complete removal of the negative pressure by blowing in nitrogen, steam or an oxidation inert shielding gas,
c) awaiting a concentration balance time allowing the oxygen to escape from the product,
d) measuring the residual oxygen content in the atmosphere surrounding the products and
e) depending on the residual oxygen content, repeating the procedual steps a) to d) several times until a target value is reached.

2. The method according to claim 1, ***characterised in that*** the residual oxygen content is decreased to below 0.1 %.

3. The method according to claim 1 or 2, ***characterised in that*** the products are cooked between mixing and filling up and the residual oxygen content remains decreased also during cooking.

4. The method according to any one of the preceding claims, ***characterised in that*** the fruit and/or vegetable products are chopped and the residual oxygen content remains decreased also during chopping.

5. The method according to any one of the preceding claims, ***characterised in that*** the products are mixed and heated in a pressure-proof batch-cooking-mixing plant.

6. The method according to any one of the preceding claims, wherein the product is evacuated to below 850 mbar negative pressure at a product temperature of below 25 °C.

7. The method according to any one of the preceding claims, ***characterised in that*** the products are evacuated in a pressure-proof batch-cooking-mixing plant with a maximum of 1,000 kg, preferably with a maximum of 300 kg batch size.

## Revendications

1. Procédé de fabrication d'une conserve alimentaire à base de lait, de fruits et/ou de légumes, les produits étant d'abord mélangés et ensuite embouteillés, la teneur en oxygène résiduelle de l'atmosphère entourante les produits étant abaissée en dessous de 1 % pendant le mélange et l'embouteillage, ***caractérisé par*** les étapes du procédé suivantes:
a) évacuer des produits au-delà de 500 mbar de pression négative à une température de produit en dessous de 70 °C,
b) réduire complète de la pression négative par soufflage d'azote, de la vapeur ou d'un gaz de protection inerte en oxydation,
c) attendre un équilibre de concentration permettant de laisser échapper l'oxygène du produit,
d) mesurer la teneur en oxygène résiduelle dans l'atmosphère entourant les produits et
e) en fonction de la teneur en oxygène résiduelle, répéter plusieurs fois les étapes du procédé a) à d) jusqu'à ce qu'une valeur cible est atteinte.

2. Procédé selon la revendication 1, ***caractérisé en ce que*** la teneur en oxygène résiduelle est abaissée en dessous de 0,1 %.

3. Procédé selon la revendication 1 ou 2, ***caractérisé en ce que*** les produits entre le mélange et l'embouteillage sont cuits et la teneur en oxygène résiduelle reste abaissée aussi pendant la cuisson.

4. Procédé selon l'une quelconque des revendications précédentes, **ca*ractérisé en ce que*** les produits à base de fruits et/ou de légumes sont coupés et la teneur en oxygène résiduelle reste abaissée aussi pendant la coupe.

5. Procédé selon l'une quelconque des revendications précédentes, ***caractérisé en ce que*** les produits sont mélangés et chauffés dans un appareil de lot-cuisson-mélange résistant à la pression.

6. Procédé selon l'une quelconque des revendications précédentes, le produit étant évacué en dessous de 850 mbar de pression négative à une température de produit en dessous de 25 °C.

7. Procédé selon l'une quelconque des revendications précédentes, ***caractérisé en ce que*** les produits sont évacués dans un appareil de lot-cuisson-mélange résistant à la pression avec une taille de lot de 1.000 kg maximum, de préférence de 300 kg maximum.
